(19) Europäisches Patentamt
European Patent Office
Office européen des brevets

(11) EP 0 726 966 B1

## (12) EUROPÄISCHE PATENTSCHRIFT

(45) Veröffentlichungstag und Bekanntmachung des Hinweises auf die Patenterteilung:
**29.04.1998 Patentblatt 1998/18**

(21) Anmeldenummer: **93903812.1**

(22) Anmeldetag: **22.02.1993**

(51) Int Cl.6: **C22C 16/00**, C22F 1/18, **B32B 15/01**, G21C 3/07

(86) Internationale Anmeldenummer:
**PCT/DE93/00149**

(87) Internationale Veröffentlichungsnummer:
**WO 93/17137 (02.09.1993 Gazette 1993/21)**

(54) **WERKSTOFF UND STRUKTURTEIL AUS MODIFIZIERTEM ZIRKALOY**

MATERIAL AND STRUCTURAL COMPONENT OF MODIFIED ZIRCALOY

MATERIAU ET ELEMENT DE CONSTRUCTION EN ALLIAGE DE ZIRCONIUM MODIFIE

(84) Benannte Vertragsstaaten:
**CH DE ES LI SE**

(30) Priorität: **28.02.1992 WOPCT/DE92/00166**
**04.05.1992 DE 9206038 U**

(43) Veröffentlichungstag der Anmeldung:
**21.08.1996 Patentblatt 1996/34**

(73) Patentinhaber: **SIEMENS AKTIENGESELLSCHAFT**
**80333 München (DE)**

(72) Erfinder:
- **GARZAROLLI, Friedrich**
  **D-8552 Höchstadt (DE)**
- **STEINBERG, Eckard**
  **D-8520 Erlangen (DE)**

(56) Entgegenhaltungen:
**EP-A- 0 085 553     EP-A- 0 194 797**
**FR-A- 2 626 291     GB-A- 2 172 737**
**US-A- 3 005 706     US-A- 3 148 055**

**Beschreibung**

Die Erfindung betrifft einen Werkstoff und ein Strukturteil, insbesondere ein Brennstab-Hüllrohr, aus einer Zirkoniumlegierung mit den Bestandteilen des Zirkaloys, für einen Siedewasser-Kernreaktor.

Für Brennelement-Kästen, Abstandhalter, Wasserrohre und andere Strukturteile im Kern eines Kernreaktors, insbesondere auch die Hüllrohre von mit oxydischen Kernbrennstoff gefüllten Brennstäben, wird wegen seines geringen Neutronen-Absorbtionsquerschnittes Zirkonium verwendet, das großtechnisch als Zirkoniumschwamm gewonnen wird und geringe Verunreinigungen anderer Elemente enthält. Um im Kühlmittel des Reaktorkerns über die langen Standzeiten der Brennelemente eine ausreichende chemische und mechanische Stabilität zu erhalten, werden dem Zirkonium-Schwamm andere Elemente, insbesondere Zinn, Eisen, Chrom und ggf. auch Nickel, in geringen Mengen zulegiert. Tabelle 1 zeigt nach ASTM B 352 und 353 genormte Zirkonium-Qualitäten und Legierungen, die für den Einsatz in Kernreaktoren freigegeben sind.

Der Entwicklung dieser Werkstoffe liegen Korrosionsversuche unter Laborbedingungen zugrunde, bei denen die chemische Aggressivität des Kühlmittels durch eine erhebliche Temperaturerhöhung gesteigert ist, um innerhalb kurzer Versuchsdauern die Korrossionsbeständigkeit des Werkstoffs zu testen, der im realen Reaktorbetrieb dem korrodierenden Kühlmittel über die lange Standzeit ausgesetzt ist. Als Maß für die Korrosion wird dabei in der Regel die Gewichtszunahme verwendet, die von der Bildung von Zirkon-Oxyd hervorgerufen ist. Dabei zeigt sich, daß sich zunächst rasch eine Oberflächenschicht aus Zirkonoxyd bildet, durch die das wässrige Kühlmittel diffundieren muß, bevor es in weiter innen liegenden Schichten des Werkstoffs eine Korrossion hervorrufen kann. Die zulegierten Bestandteile verringern die Oxydbildung an der Oberfläche und die Diffusion des Kühlmittels, erhöhen somit die Korrossionsbeständigkeit des Werkstücks.

Eine Besonderheit des Siedewasserreaktors ist, daß die Werkstücke sowohl gegenüber flüssigem Wasser als auch gegenüber Wasserdampf korrosionsbeständig sein müssen. Erfahrungsgemäß wirken Maßnahmen, die bei Wasserdampf wirkungsvoll sind, nicht immer auch bei flüssigem Wasser, so daß insbesondere Labortests bei hohen Temperaturen und Drucken, bei denen zwischen flüssiger und dampfförmiger Phase nicht mehr unterschieden werden kann, für die Korrosion unter den Betriebsbedingungen von Siedewasser-reaktoren nicht aussagekräftig sind.

Ferner können im Wasser enthaltene Fremdstoffe, die z. B. von Lecks in Kondensatoren oder von anderen Bauteilen des Kühlmittelkreislaufs stammen oder zum Schutz dieser Bauteile zugesetzt werden, in den unverdampften Flüssigkeitströpfchen konzentrieren und dadurch die Korrosionsbedingungen verschärfen, sobald es an den heißen Brennstäben zu Dampfbildung kommt.

Im realen Reaktorbetrieb tritt neben der über die Oberfläche verhältnismäßig gleichmäßig verteilten LangzeitKorrosion zumindest bei Siedewasser-Reaktoren häufig eine lokale Korrosion auf, die von spezifischen Korrosionskeimen, z. B. Bereichen abweichender Zusammensetzung, ausgeht und zu fortschreitenden lokalen Zerstörungen des Werkstücks führen kann. Diese "nodulare" Korrosion tritt vor allem unter den Betriebsbedingungen des Siedewasserreaktors auf, also der Strahlungsbelastung des Werkstoffs und den speziellen chemischen und thermischen Einflüssen, die sich durch die erwähnten Korrosionsversuche unter Laborbedingungen schlecht simulieren lassen.

Der bei dieser Oxydation frei werdende Wasserstoff ist für die mechanische Stabilität des Werkstückes von Bedeutung, da er entsprechend dem sich lokal ausbildenden Wasserstoff- Partialdruck in das Werkstück hineindiffundiert und dort zu einer bestimmten Wasserstoff-Konzentration und Hydrierung führt. Hydrierte Zirkonium-Bereiche zeigen jedoch eine starke Versprödung, so daß das Werkstück mechanischen Belastungen nicht mehr standhalten kann. Durch die zulegierten Bestandteile soll daher auch die Diffusion und die Aufnahme von Wasserstoff und die Bildung hydrierter Bereiche verringert werden, denn nicht nur während des Reaktorbetriebes auftretende äußere Einflüsse, wie z. B. vom strömenden Kühlmittel hervorgerufene Vibrationen, sondern auch thermische Effekte, eine bei der Oxydation und Hydrierung des Werkstoffs auftretende Volumenzunahme und andere betriebsbedingte Veränderungen führen zu unvermeidlichen mechanischen Spannungen. Dabei ist besonders auch zu berücksichtigen, daß die Neutronenstrahlung zu Veränderungen der Materialstruktur und der Dimensionen der Werkstücke (bei Brennstäben z. B. zu einer wachsenden Länge und einem abnehmenden Durchmesser des Hüllrohres) führen kann. Da diese Belastungen nur im realen Reaktorbetrieb auftreten, ist es erforderlich, die im Reaktor eingesetzten Werkstücke von Zeit zu Zeit gründlich zu inspizieren, um ihr weiteres Verhalten abzuschätzen, ggf. einen Austausch vorzunehmen und die für die Werkstücke erforderlichen Materialstärken festzulegen.

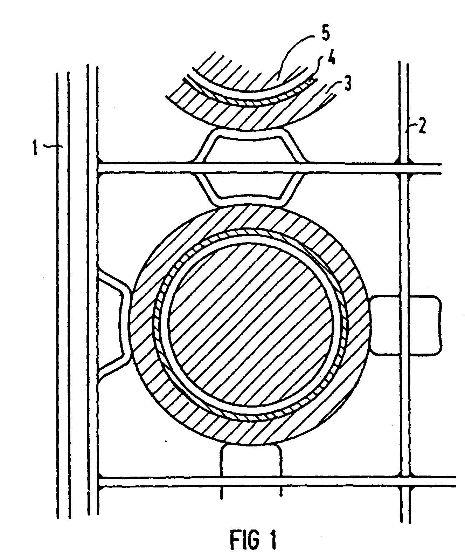

Figur 1 zeigt einen Teilquerschnitt durch ein Brennelement eines Siedewasserreaktors, bei dem im Inneren eines Brennelement-Kastens 1 an verschiedenen axialen Positionen jeweils ein gitterförmiger Abstandhalter 2 angeordnet ist, durch dessen Gitter-Maschen Brennstäbe geführt sind. Diese Brennstäbe bestehen aus einem Brennstab-Hüllrohr ("Cladding" 3), das an seiner Innenseite ggf. mit einer Auskleidung ("Liner" 4) versehen ist und eine oxydische Brennstoff-Füllung, z. B. Brennstoff-Tabletten ("Pellet" 5) umgibt. Die Auskleidung besitzt etwa 5 - 20 % der Dicke des Hüllrohrs und ist metallurgisch gebunden; z. B. können zwei entsprechende konzentrische Rohre gemeinsam extrudiert und (etwa durch Pilgern) auf die Abmessung des Hüllrohres mechanisch bearbeitet sein.

Mit der Innenauskleidung 4 der Brennstab-Hüllrohre sollen spezielle Belastungen des Brennstabes berücksichtigt werden. So werden z. B. bei der Spaltung Jod und andere Spaltprodukte im Brennstab-Innenraum gebildet, die - im Gegensatz zu anderen Korrosionsvorgängen - nicht in meßbarer Menge zur Bildung von Oberflächenschichten aus korrodiertem Material oder zur Materialabtragung führen, aber lokale Schäden in der Materialstruktur hervorrufen, die bei mechanischen Belastungen zu Keimen führen, von denen schnell wachsende Risse ausgehen können.

Ferner entstehen zwischen der heißen Brennstoff-Füllung an der Hüllrohr-Innenseite und dem Kühlmittel an der Hüllrohr-Außenseite ein hoher Temperaturgradient und ein entsprechender Wärmestrom, wobei Oxydschichten am Hüllrohr eine besondere Wärmestrom-Barriere darstellen. Mit fortschreitender Korrosion treten daher starke Veränderungen der lokalen Wärmebelastung auf, die auch starken zeitlichen Schwankungen unterworfen ist, wenn z. B. zur Lastwechsel-Steuerung Steuerelemente im Reaktorkern ein- und ausgefahren werden. Aufgrund der Bestrahlung quillt außerdem die vom Hüllrohr eingeschlossene Brennstoff-Füllung im Laufe der Betriebszeit zunehmend auf.

An der Innenseite der Hüllrohre kommt es daher oft zu innigen Kontakten zwischen Cladding und Pellet und starken chemischen und mechanischen Belastungen (sogenannte "Pellet-Cladding-Interaction", PCI), die zu lokalen Schädigungen führen können, aus denen später kleine Löcher werden. Durch diese Löcher kann einerseits Kühlmittel in den Brennstab eintreten, wodurch sich die Korrosionsbedingungen an der Innenseite verschlechtern, andererseits können Spaltprodukte in das Kühlmittel austreten und dort zu einer radioaktiven Kontamination führen. Durch die Innenauskleidung 4 des zweischichtigen Hüllrohres ("Duplex-Rohres") soll daher einerseits eine Diffusionsbarriere für aggressive Spaltprodukte, andererseits eine duktile Schutzschicht zum Abbau von mechanischen Spannungen an der Hüllrohr-Innenseite geschaffen werden.

In Tabelle 2 sind eine Vielzahl von Patentanmeldungen angegeben, bei denen die Anzahl dieser PCI-Defekte dadurch stark herabgesetzt werden soll, daß die Innenauskleidung nicht aus Zirkaloy, sondern aus reinem Zirkonium oder Zirkoniumschwamm gefertigt wird, wobei häufig geringe Zusätze (Eisen, Chrom und/oder Niob) als vorteilhaft angesehen werden. Legierungszusätze, die für Werkstücke des Reaktorkerns nach den geltenden Normen nicht zugelassen sind und/oder deren Mengen weit außerhalb der für Zirkaloy liegenden Grenzen liegen, werden aber erst nach langwierigen und teueren Vorbereitungszeiten und nur für bestimmte Anwendungen, z. B. für die dünnen Innenauskleidungen von Duplex-Rohre von den Genehmigungsbehörden und Kraftwerksbetreibern akzeptiert. Bei der Hüllrohr-Fertigung anfallender Verschnitt und Ausschuß kann daher nicht ohne weiteres eingeschmolzen und als Ausgangsmaterial für andere Legierungen (z. B. für Abstandhalter oder die dickeren Außenschichten der Duplex-Rohre) verwendet werden. Werden aber alle Duplex-Rohre aus üblichem Zirkaloy mit einer Innenauskleidung aus Reinzirkonium oder Zirkoniumschwamm verwendet, so kann zwar möglicherweise die Häufigkeit der lokalen PCI-Defekte stark verringert werden, aber vereinzelte Hüllrohre können aufplatzen oder von Innen ausgehende Risse zeigen, die zu großflächigen Schäden führen, über die große Mengen von Spaltprodukten austreten können.

Bereits wenige dieser großflächigen Schäden können zu einer erheblich höheren Kontamination des Kühlmittels führen als viele lokale PCI-Defekte. Dabei können andere primäre, nie mit vollkommener Sicherheit auszuschließende Schadensursachen vorliegen, z. B. mikroskopische Schweißfehler an den Verschlußkappen der Brennstäbe oder mechanische Schäden durch Fretting.

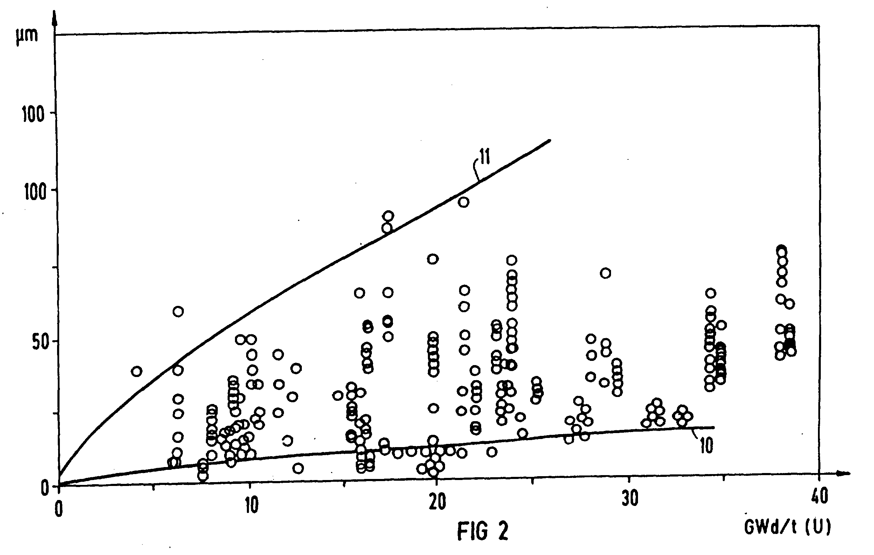

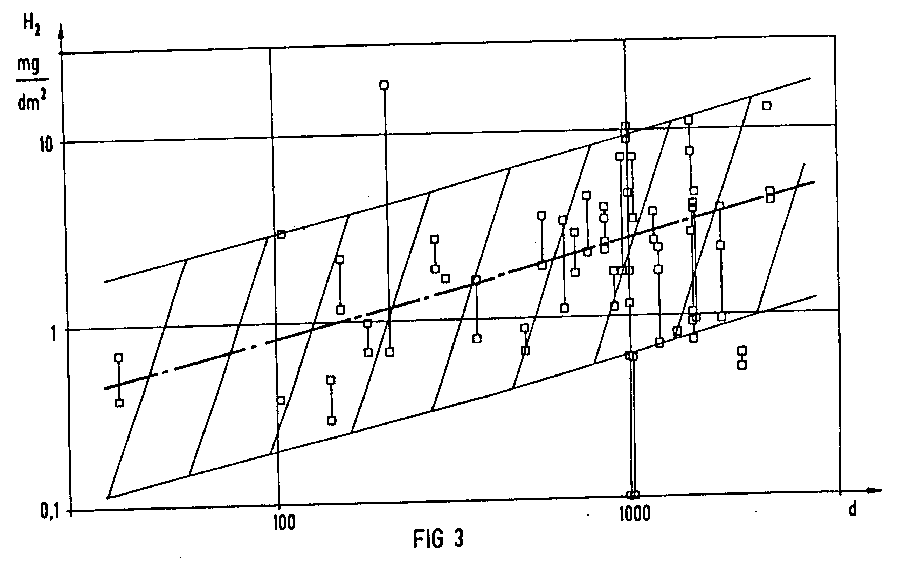

Daher muß z. B. die Materialdicke der in Fig. 1 gezeigten Strukturteile des Siedewasser-Brennelementes so gewählt werden, daß innerhalb der für die Standzeit des Brennelementes vorgesehenen Betriebsdauer die aufgrund der Materialeigenschaften zu erwartende gleichmäßige Korrosion, nodulare Korrosion und Hydrierung sowie zumindest bei Brennstäben auch die Lastwechsel-Beständigkeit und die Gefahr von Hüllrohr-Schäden nicht zu einem vorzeitigen Versagen des Teiles führen können. Die für derartige Schäden verantwortlichen Materialeigenschaften unterliegen jedoch starken Streuungen. Figuren 2 und 3 zeigen die unter Reaktorbedingungen beobachteten Werte der mit wachsendem Abbrand (Betriebsdauer) wachsenden Oxidschicht bzw. der charakteristischen Gewichtszunahme und der für die mechanische Stabilität entscheidenden Wasserstoffaufnahme für Zirkaloy-Werkstoffe, die jeweils der ASTM-Norm entsprechen. Für die Auslegung der Strukturteile ist dabei vom ungünstigsten Fall, also den Obergrenzen dieser störenden Einflüsse bei den längsten Betriebsdauern, auszugehen.

In EP-A-0 085 553 ist ein Hüllrohr eines Brennstabs beschrieben, das aus Zirkaloy besteht und durch Beta-Glühen und nachfolgendes Abschrecken eine Struktur mit fein verteilten Sekundärausscheidungen erhält, die bei nachfolgenden Feinverformungen mit Temperaturen unter 620° C erhalten bleiben und eine mittlere Teilchengröße von etwa 0,05 bis 0,07 µm besitzen. Das dabei verwendete Zirkaloy besteht aus 1,49 % Sn, 0,21 % Fe, 0,11 % Cr, 0,0055 % Ni, 0,0082 % Si, 0,113 % 0, 0,0147 % C, Rest: Zirkonium mit Verunreinigungen (alle Angaben in Gew.%). Das Hüllrohr zeigt im Autoklaven unter Dampf von 454° C eine geringere Korrosion als übliches Zirkaloy-4, das bei 780° C warmverformt ist.

Die GB-A-2 172 737 beschreibt ein Hüllrohr aus Zirkaloy-2 (1,45 % Sn, 0,16 % Fe, 0,12 % Cr, 0,05 % Ni) mit einer Innenauskleidung aus unlegiertem Zirkonium, dessen Gehalt an Eisen zwischen 0,025 und 0,100 % liegt. Bei einem anderen Hüllrohr (EP-A-0 194 797) trägt eine Außenschicht aus Zirkaloy-2 oder Zirkaloy eine Innenauskleidung aus Zirkonium mit 0,4 bis 0,6 % Sn, 0,5 bis 1,4 % Fe und 0,01 bis 0,07 % 0.

Der Erfindung liegt die Aufgabe zugrunde, bei Hüllrohren aus Zirkaloy-ähnlichen Werkstoffen deren "Effektivität", also die Resistenz gegenüber derartigen Schädigungseinflüssen bei möglichst geringen Wandstärken, zu verbessern.

Die Erfindung geht dabei davon aus, daß Ergebnisse, die aus Kurzzeittests bei höheren Temperaturen (z. B. über 500° C) und/oder Laborbedingungen gefunden werden, für Siedewasserreaktoren mit ihren etwa bei 285° C liegenden Betriebstemperaturen ebensowenig aussagekräftig sind, wie die ebenfalls bei höheren Temperaturen und anderen chemischen Eigenschaften des Kühlmittels beobachteten Ergebnisse an DruckwasserReaktoren. Der Einfluß bestimmter Legierungszusätze kann bei Siedewasserreaktoren durchaus entgegengesetzt sein zu den unter den veränderten Bedingungen gefundenen Erkenntnissen. Der neue Werkstoff ("modifiziertes Zirkaloy") muß daher in erster Linie nach Erkenntnissen optimiert werden, die aus Langzeitversuchen in einem tatsächlichen Reaktorbetrieb gefunden werden. Derartige Realversuche sind aber äußerst zeitraubend, da sie sich über die insgesamt vorgesehenen Betriebszyklen eines Brennelementes (also z. B. vier Jahre und mehr) erstrecken müssen, und sehr teuer. Versuche, bei denen von Rein-Zirkonium oder Zirkoniumschwamm ausgegangen und die verschiedensten Zusatzstoffe zulegiert werden, um ein dem zugelassenen Zirkaloy überlegenen Werkstoff zu finden, scheiden daher aus praktischen und finanziellen Gründen aus. Die Erfindung beschreitet daher den Weg, durch systematische Veränderung der Gewichtsanteile der einzelnen, bereits bei Zirkaloy erprobten Legierungsbestandteile modifizierte Ober- und Untergrenzen der entsprechenden Gewichtsanteile zu finden, wobei auch die Kornstruktur des Materials berücksichtigt werden kann. Der neue Werkstoff liegt daher zwar weitgehend innerhalb der für Zirkaloy 2 und/oder Zirkaloy 4 vorgegebenen Konzentrationsbereiche seiner Bestandteile (wobei auch eine geringfügige Überschreitung der bisher zugelassenen Maximalwerte sinnvoll erscheint), schränkt jedoch diese Konzentrationsbereiche so weit ein, daß die bei diesem Material gefundenen Eigenschaften nur noch eine verhältnismäßig geringe Exemplarstreuung aufweisen und die im ungünstigsten Fall gefundenen Werte entscheidend günstiger sind als bei den bisher verwendeten Konzentrationsbereichen.

Die Erfindung sieht daher gemäß Anspruch 1 ein Brennstab-Hüllrohr vor, das mit, einer Innenauskleidung aus ZrFe versehen, ist. Bevorzugte Ausgestaltungen des Hüllrohres sind Gegenstand der Ansprüche 2 bis 5. Anspruch 6 ist auf einen Brennstab mit dem beanspruchten Hüllrohr gemäß einem der Ansprüche 1 bis 5 gerichtet.

Soweit die Innenauskleidung aus Zirkonium weitere Legierungszusätze enthält, ist deren Gehalt vorzugsweise geringer als der Gehalt an Eisen.

Die Optimierung des Werkstoffs hat dabei besonders

- die Langzeitkorrosion,
- die Wasserstoffaufnahme und
- die nodulare Korrosion

unter den Verhältnissen des Siedewasserreaktors zu berücksichtigen, wobei zusätzlich

- das Auftreten von PCI-Defekten bei schnellen lokalen Leistungsänderungen und
- die Gefahr großflächiger, von der Innenseite ausgehender Defekte

berücksichtigt werden muß.

Tabelle 3 zeigt für die Legierungsbestandteile, die für die erwähnten Schadensursachen wichtig sind, die sich aus der Erfindung ergebenden Mindest- und Höchstgrenzen. Dabei sind in Klammern vorteilhaft angesehene, speziellere Grenzwerte aufgeführt. Daneben sind die davon abweichenden Grenzwerte für die genormten Legierungen Zirkaloy 2 und Zirkaloy 4 zum Vergleich angegeben.

Tabelle 4 gibt minimale und maximale Konzentrationsgrenzen für vorteilhafte Werkstoffe an, die gleichzeitig die Spezifikation für Zirkaloy 2 und Zirkaloy 4 erfüllen. Mit "Zry- Cr" sind daneben abweichende, aber erfolgversprechende Obergrenzen für die Konzentration an Chrom und die Summe aus Eisen, Chrom und Nickel angegeben, die nur geringfügig über den für Zirkaloy 2 und Zirkaloy 4 vorgeschriebenen Höchstwerten liegen und zu einem modifizierten Zirkaloy führen, dessen Zulassung als Reaktorwerkstoff daher keine weiteren Schwierigkeiten bieten dürfte.

Vorteilhafte Weiterbildungen der Erfindung sind in den weiteren Ansprüchen angegeben.

In Tabelle 5 sind die in erster Linie untersuchten Werkstoffe angegeben. Anhand von Ausführungsbeispielen und weiteren Figuren wird die Erfindung näher erläutert.

Es zeigen:

Figur 1 die bereits besprochene Struktur eines Brennelementes mit Strukturteilen gemäß der Erfindung,
Figur 2 das bereits erwähnte Oxidschicht-Wachstum bei Zirkaloy infolge Korrosion in einem Siedewasserreaktor,
Figur 3 die bereits erwähnte Wasserstoffaufnahme des Zirkaloys in einem Siedewasserreaktor,
Figur 4 den Einfluß von zulegiertem Chrom und Silizium bzw. verringertem Sauerstoff auf die Korrosion des Werkstoffs bei unterschiedlichen Zinn-Gehalten,
Figur 5 den Einfluß eines unterschiedlichen Chrom-Gehaltes auf die Korrosion von Werkstoffen bei zwei unterschiedlichen Zinn-Gehalten,
Figur 6 den entsprechenden Einfluß von Silizium bei unterschiedlichem Gehalt an Sn und C,

Figur 7 den Einfluß von Sauerstoff auf die Korrosion bei Werkstoffen mit unterschiedlichem Gehalt an Zinn und/ oder Silizium,

Figur 8 das Verhältnis des Particle Growth Parameters zur Größe der Sekundärausscheidungen,

Figur 9 den Einfluß des mittleren Durchmessers von Sekundärausscheidungen auf die Korrosionsempfindlichkeit,

Figur 10 die relative Wasserstoffaufnahme des Werkstoffs als Funktion des Chrom-Gehaltes,

Figur 11 den Einfluß von Eisen auf das Korrosionsverhalten eines Zirkonium-Liners bei 350° C,

Figur 12 die Dicke des Hydridsaumes als Funktion des $H_2O$-Partialdrucks bei verschieden dotierten Zirkon-Eisen-Linern und

Figur 13 einen Vergleich der bei verschiedenen Jod-Konzentrationen auftretenden Bruchdehnungen von Hüllrohren.

Figur 2 zeigt die Oxidschicht-Dicken von Brennstäben, deren Hüllrohre homogen und aus üblichem Zirkaloy gefertigt sind und die Siedewasserreaktoren entnommen wurden, nachdem die betreffenden Brennelemente verschiedene Abbrände ihres Kernbrennstoffs erreicht haben. Die untere Kurve 10 gibt ein mittleres Schichtdickenwachstum an, das an Brennstäben mit einer im wesentlichen gleichmäßig korrodierten Oberfläche auftritt. Viele dieser gleichmäßig korrodierten Stäbe waren auf eine Weise hergestellt, die dazu führte, daß die Legierungszusätze teilweise als Partikel ("Sekundärausscheidungen") einer bestimmten Teilchengröße in der Kornstruktur des Rohrmaterials ausgeschieden wurden. Die obere Kurve 11 beschreibt das Wachstum der Korrosionskeime ("Noduln"), die sich bei Brennstäben mit überwiegend nodularer Korrosion ausbilden.

Die erfindungsgemäßen Werkstoffe zeigen nur eine sehr geringe nodulare Korrosion und liegen bei Werten in Nähe von oder unterhalb der Kurve 10. Die an herkömmlichen Zry-Rohren auftretenden Streuungen des Oxidationsverhaltens werden also auf einen optimalen Bereich eingeengt.

Die Wasserstoffaufnahme (gemessen in mg $H_2$ pro $dm^2$) streut sowohl bei Zry-Brennstoff-Hüllrohren wie auch bei Zry-Abstandshaltern sehr stark, unabhängig von dem Ausmaß der zu ihrer Herstellung verwendeten Kaltverformung. Auch diese Meßwerte wurden nach unterschiedlichen Verweildauern der Werkstücke in Siedewasserreaktoren aufgenommen.

Auch hier soll durch eine gezielte Auswahl der Mengen der Legierungszusätze zum Zirkaloy ("Zry") der Streubereich auf einen niedrigen Bereich eingeengt werden, wobei aber auch die Optimierung bezüglich der Korrosion entsprechend Kurve 10 der Figur 2 erreicht werden soll. Ein Legierungszusatz, der sich günstig auf die Korrosionsbeständigkeit auswirkt, kann aber auf die Wasserstoffaufnahme ungünstig wirken.

Zur Untersuchung dieser Einflüsse wurden nach gleichem oder zumindest vergleichbaren Fertigungsverfahren eine Vielzahl von Werkstücken aus unterschiedlichen, vorgegebenen Legierungen hergestellt, die in sehr aufwendigen Versuchen über vier Betriebszyklen den Bedingungen des Reaktorkerns ausgesetzt wurden. Die chemische Zusammensetzung einiger Werkstücke wurde genau analysiert und ist in Tabelle 5 angegeben.

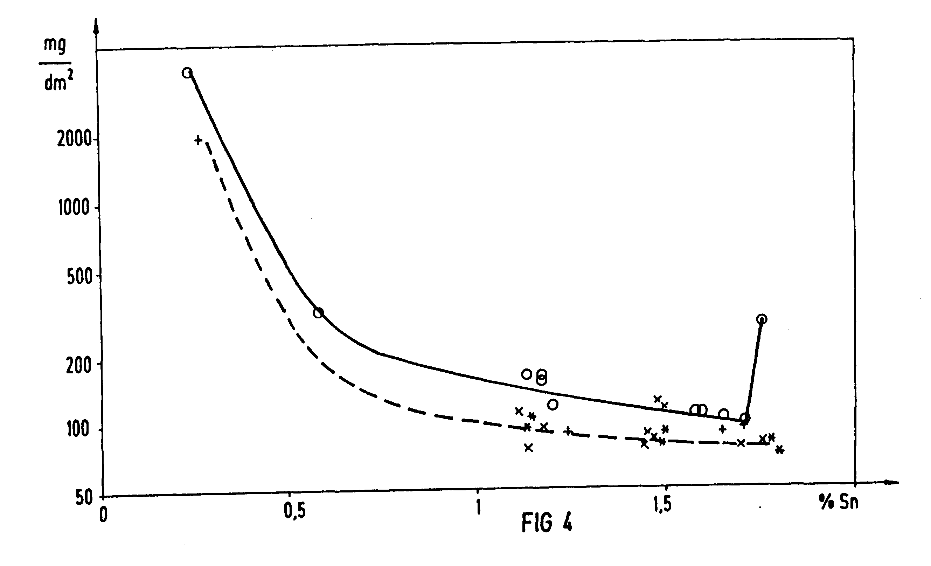

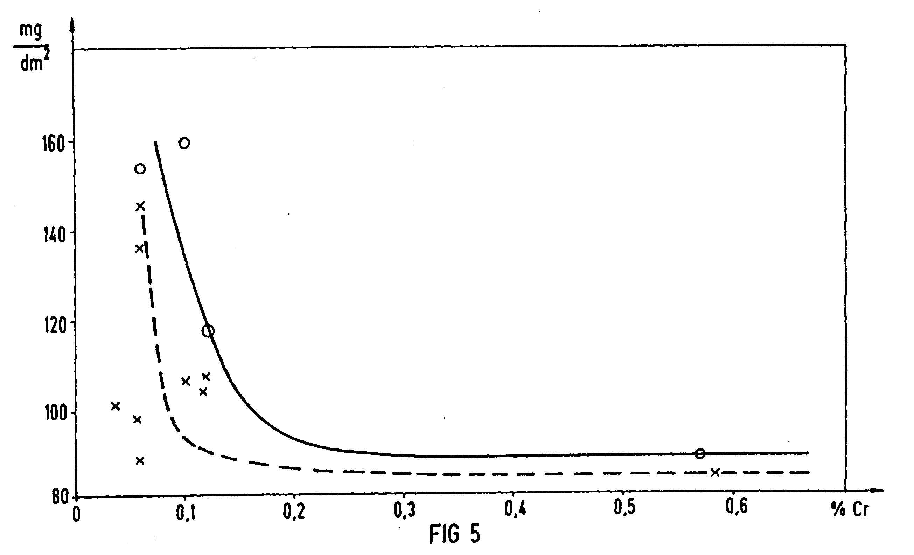

Dabei zeigt sich gemäß Figur 4, daß gegenüber normalen Zusammensetzungen (Symbol "o") jeweils ein erhöhter Gehalt an Chrom (Symbol "+"), ein hoher Gehalt an Silzium (Symbol "x") und ein reduzierter Gehalt an Sauerstoff (Symbol "*") mit einer veränderten Korrosion verbunden ist. Im einzelnen zeigt die in Figur 5 durchgehend gezeichnete Linie die Abhängigkeit der Gewichtszunahme an der Oberfläche (Milligramm pro $dm^2$) bei veränderlichem Chrom-Gehalt bei einem Werkstoff, der 1,2 Gew.% Zinn enthält (Meßpunkte "o"), während eine unterbrochene Linie diese Abhängigkeit für einen Werkstoff zeigt, der 1,65 Gew.% Zinn enthält. Bei Chromgehalten über etwa 0,1 Gew.%, insbesondere über 1,5 Gew.%, ist demnach nur eine geringe Korrosionsneigung zu erwarten, die auch bei hohen Chromgehalten praktisch erhalten bleibt.

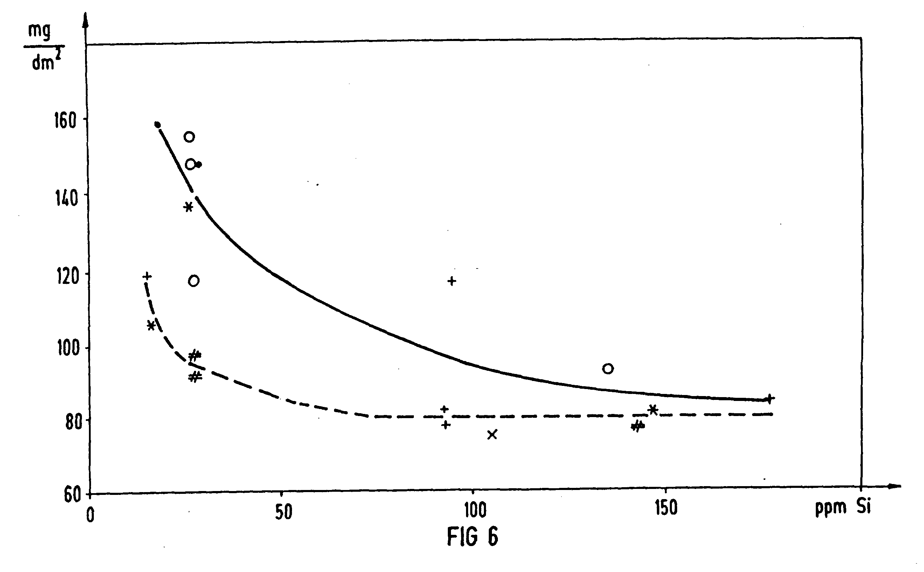

Figur 6 zeigt für einen Werkstoff mit 1,2 Gew.% Zinn und einen Kohlenstoffgehalt unter 120 ppm (Symbol "o") bzw. zwischen 170 und 270 ppm (Symbol "."), einem Siliziumgehalt unter 40 ppm und einem Sauerstoffgehalt von 1200 ppm korrosionsbedingte Gewichtszunahmen nach vier Brennelementzyklen. Wird der Zinngehalt auf 1,5 Gew.% gesteigert, so ergeben sich Meßwerte, die durch das Symbol "+" für den Werkstoff mit dem niedrigeren Kohlenstoffgehalt und durch das Symbol "x" für einen Werkstoff mit dem höheren Kohlenstoffgehalt angegeben sind, während bei einem Zinngehalt von 1,7 Gew.% die entsprechenden Meßwerte durch di-e Symbole "#" und "*" gekennzeichnet sind. Mit durchbrochenen Linien ist eine Abhängigkeit der Gewichtszunahme vom Silizium-Gehalt angegeben, die für einen vorteilhaften Werkstoff mit einem Zinngehalt über 1,4, insbesondere über 1,45 Gew.%, und einem Kohlenstoffgehalt unter 200 ppm, insbesondere unter 150 ppm gelten dürfte, während die als durchgezogene Linie dargestllte Abhängigkeit für Werkstoffe mit niedrigerem Zinngehalt und/oder höherem. Kohlenstoffgehalt zu erwarten ist.

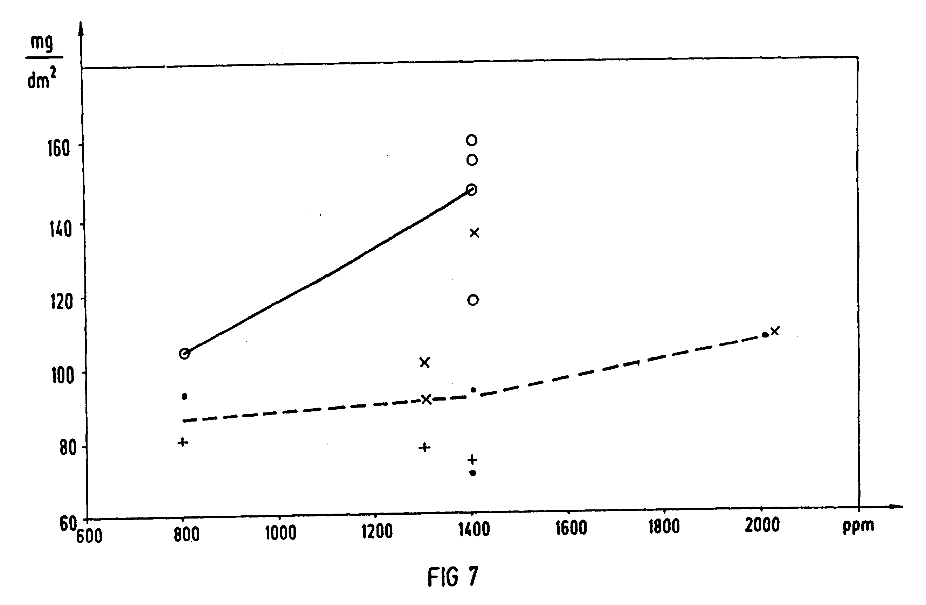

Gemäß Figur 7 führt bei dem Werkstoff mit dem niedrigeren Zinngehalt (1,2 %) ein Siliziumgehalt unter etwa 40 ppm zu einer ungünstigen Abhängigkeit der Gewichtszunahme vom Sauerstoffgehalt, die durch das Symbol "o" angegeben und mit einer durchgezogenen Linie dargestellt ist. Meßwerte mit einem vorteilhaften Siliziumgehalt zwischen 86 und 177 ppm sind durch das Symbol "." gekennzeichnet und liegen etwa auf der unterbrochen gezeichneten Linie, die auch Meßwerte bei einem Zinngehalt von etwa 1,7 Gew.% beschreibt, wobei der Silziumgehalt zwischen 86 und 177 ppm (Symbol "+") liegt. Bei etwa 1,7 % Sn und unter 40 ppm Si streuen die Werte (Symbol "x"). Während also ein Silizium-gehalt unter etwa 50 ppm zu einer ungünstigen Gewichtszunahme führt, kann insbesondere bei Siliziumgehalten zwischen 70 und 200 ppm eine Senkung der Korrosionsanfälligkeit erwartet werden.

Dabei ist zu bemerken, daß die Abhängigkeit des Korrosionsverhaltens von diesen Legierungsbestandteilen anders und bei fast allen Bestandteilen gegenläufig zu der Abhängigkeit ist, die aus den bereits erwähnten Ergebnissen von kurzzeitigen Korrosionstest bei deutlich höheren Temperaturen (vgl. R.A. Draham et al in: "ASTM STP 1023", 1988, Seite 334) gefunden und für die Brennstäbe von Druckwasserreaktoren (vgl. Weidinger und Lettau in "IAEA Int. Symp. on improvements in Water Reactor Fuel Technology for LWR Fuel", S. 451, Stockholm, 1986) angewandt werden. Das Korrosionsverhalten im Siedewasserreaktor unterscheidet sich also wesentlich von Beobachtungen, die bei erhöhten Temperaturen und/oder bei der Wasserchemie des Druckwasserreaktors gefunden werden können.

Bei Figur 2 wurde bereits erwähnt, daß die Legierungsbestandteile des Zirkaloys die Langzeitkorrosion von Zry-Brennstäben dann vermindern, wenn die im Zirkaloy auftretenden intermetallischen Ausscheidungen eine gewisse Mindestgröße aufweisen.

Um einen definierten Durchmesser der Sekundärausscheidungen einzustellen, müssen Temperatur und Dauer der nach Beginn der Teilchenausscheidung vorgenommenen Wärmebehandlungen kontrolliert werden. Dies geschieht vorteilhaft, indem der Werkstoff (z. B. ein aus der Legierung gewonnener Rohr-Rohling) zunächst auf Temperaturen über 1000° C erwärmt wird (Beta-Glühen oder Lösungsglühen), wobei die Legierungsbestandteile in Lösung gehen. Durch Abschrecken auf Temperaturen unter 800° C (Alpha-Bereich) entstehen fein verteilte Ausscheidungen, die bei weiteren Wärmebehandlungen, die stets in diesem Alpha-Bereich vorgenommen werden, wachsen können.

Für verschiedene Glühtemperaturen T und Glühdauern t dieser Beta-Behandlung findet man, daß bei der gleichen Legierungszusammensetzung gleiche mittlere Teilchengrößen erhalten werden, wenn der Parameter (Teilchengrößen-Wachstumsparameter, Particle Growth Parameter "PGP"):

$$PGP = 10^{14} \cdot t \cdot \exp(-Q/nRT)$$

gleich ist. Dabei ist n eine für den Wachstumsprozeß typische Größe (z. B. n = 2 für das Korngrößenwachstum, n = 0,57 für die hier betrachtete Sekundärausscheidung) und Q/R eine von den Legierungselementen abhängige Aktivierungstemperatur (hier: 18240 K).

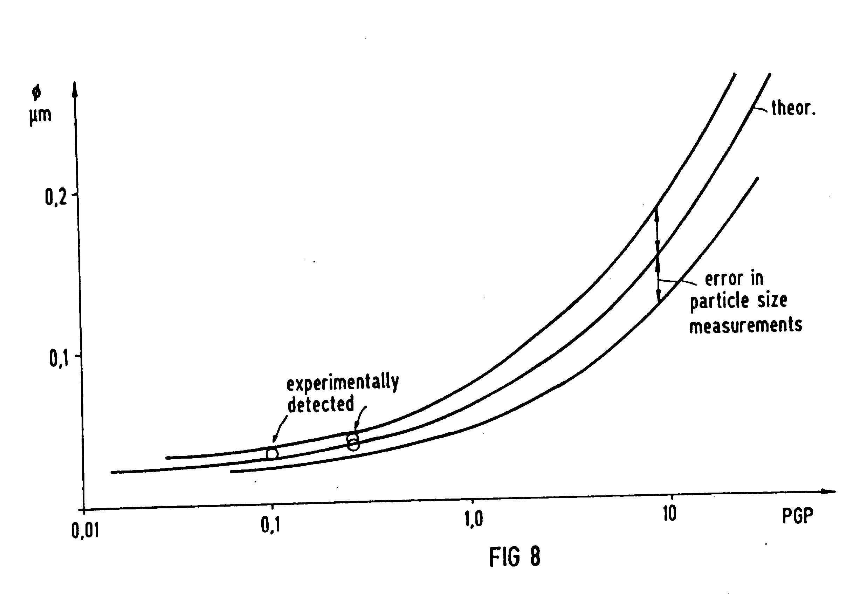

Dieser PGP-Wert gestattet, verschiedenen Glühdauern und Glühtemperaturen den erhaltenen Teilchendurchmesser zuzuornden. Figur 8 zeigt den Zusammenhang zwischen PGP und Teilchendurchmesser.

Zur Herstellung von zweischichtigen Hüllrohren geht man daher vorteilhaft von einem zweischichtigen Rohr-Rohling aus, der durch Extrudieren zweier konzentrischer Rohre gewonnen und nach einem Lösungsglühen abgeschreckt ist. In nachfolgenden mechanischen Bearbeitungen (z. B. in einer Pilgermaschine) werden die Endabmessungen hergestellt, indem zwischen jedem Bearbeitungsschritt bei definierten Temperaturen und jeweiligen Glühdauern so zwischengeglüht wird, daß sich in der Summe der gewünschte PGP ergibt. Daran kann sich gegebenenfalls eine Abschlußglühung bei einer Temperatur anschließen, bei der praktisch kein Teilchenwachstum mehr stattfindet.

In analoger Weise können auch gewalzte Bleche und Werkstücke homogener Zusammensetzung erzeugt werden.

Die erfindungsgemäßen Werkstoffe weisen einen PGP zwischen 0,06 und 1,0, vorteilhaft zwischen 0,1 und 0,6 auf; dies entspricht ungefähr vorteilhaften Teilchengrößen der Sekundärausscheidungen zwischen 0,3 und 0,7 μ.

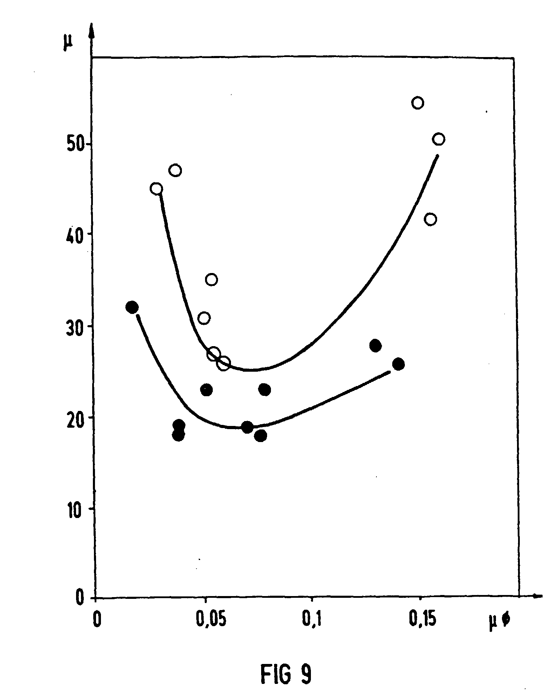

Figur 9 zeigt für zwei unterschiedliche Reaktoren (Symbol "o" und Symbol ".") die nach 4 Betriebszyklen gefundene Dicke der Oxydschichten in Abhängigkeit vom mittleren Durchmesser der im Zirkaloy gebildeten intermetallischen Ausscheidungen (Sekundärausscheidung).

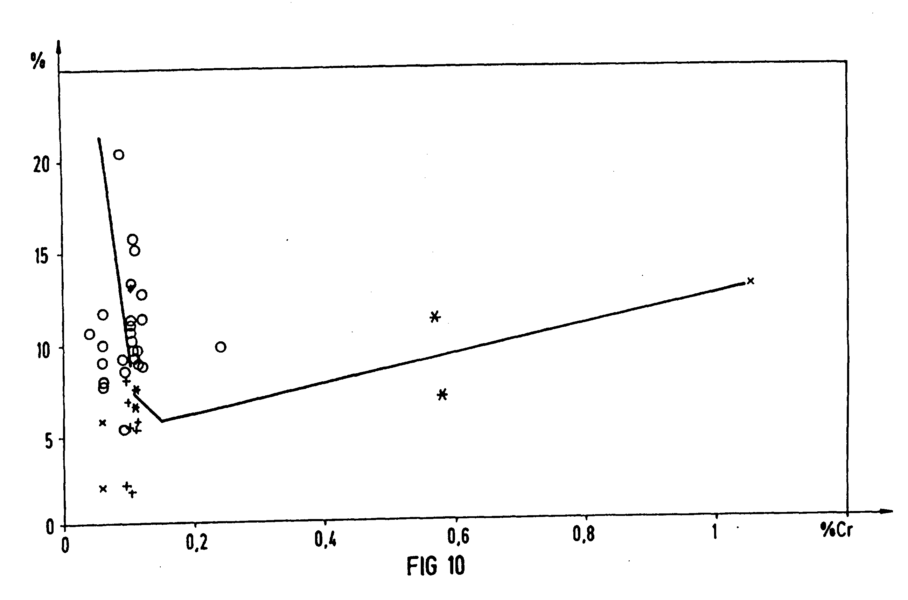

Figur 10 zeigt bei Materialproben, die dem Siedewasserreaktor nach zwei Beladungszyklen entnommen sind, daß zumindest bei einem Chromgehalt zwischen etwa 0,05 und 0,4 Gew.% die relative Wasserstoffaufnahme (d.h. der aufgenommene Wasserstoff als Prozentsatz des bei der Oxidation theoretische freiwerdenden Wasserstoffs) praktisch von der Oxidation selbst unabhängig ist:

Denn sowohl bei einer geringen Gewichtszunahme des Werkstoffs (unter 65 mg/dm², Symbol "+") und bei hoher Gewichtszunahme (über 200 mg/dm², Symbol "x"), wie auch bei dazwischenliegenden Werten (zwischen 65 und 90 mg/dm², Symbol "*" und zwischen 91 und 200 mg/dm², Symbol "o") können relative H-Aufnahmen unter etwa 7,5 % beobachtet werden. Es zeigt sich aber, daß die Wasserstoffaufnahme aus dem Kühlmittel durch den Chromgehalt des Werkstoffs beeinflußt wird. Vorteilhaft wird der Chromgehalt über 0,1 (bevorzugt über 0,12) Gew.% und unter etwa 0,3 (bevorzugt etwa 0,25) Gew.% gehalten.

Wie bereits erwähnt wurde, ist Zirkaloy gegenüber Wasserdampf deutlich korrosionsstabiler als reines Zirkonium, und die bei der Korrosion von Zirkaloy sich bildende oxidische Oberflächenschicht stellt, wie thermodynamische Überlegungen und experimentelle Überprüfungen zeigen, eine erhebliche Barriere für eindifundierenden Wasserstoff dar.

Im Fall von mikroskopischen Schäden am Hüllrohr kann Kühlmittel in den Innenraum von Brennstäben eindringen. Derartiger Wasserdampf im Innenvolumen führt zu einer Oxidschicht an der Innenfläche des Hüllrohrs, vor allem aber auch zu einer weiteren Oxydation des Brennstoffs und damit zur Ausbildung eines gewissen Wasserstoff-Partialdruk-

kes und einer zusätzlichen Hydrierung. Diesen vom Brennstab-Inneren ausgehenden Vorgängen wirkt eine Oxydschicht entgegen, die sich an der Innenfläche aus Zirkaloy ausbildet.

Da jedoch der quellende Brennstoff insbesondere bei Lastwechseln und damit verbundenen thermischen Veränderungen des Hüllrohr-Querschnittes in mechanischen Kontakt mit dem Hüllrohr tritt, kann es z. B. durch aggressive Spaltprodukte wie Jod oder Cäsium zu vereinzelten lokalen Schäden der schützenden Oxidschicht kommen. An solchen Schadstellen kann dann Wasserstoff entsprechend seinem Partialdruck ungehindert in den Werkstoff eindringen und dort zu einer sekundären Hydrierung führen. Derartige "sunburst"-Hydrierungen sind zunächst als Beulen an der Innenfläche der Hüllrohre erkennbar und führen später zu kleinen Löchern. Innenauskleidungen aus reinem Zirkonium oder darauf aufgebauten Legierungen sollen einerseits die mechanischen Spannungen aufgrund ihrer Duktilität rasch abbauen, andererseits den aggressiven Spaltprodukten eine zusätzliche Barriere entgegenstellen, so daß daher ein Hüllrohr entsteht, das Lastwechseln gegenüber weitgehend unempfindlich ist und eine verringerte Häufigkeit von PCI-Defekten zeigt.

Andererseits aber ist ein derartiger Liner mit seiner höheren Reinheit im Vergleich zu Zirkaloy stärker korrosionsgefährdet: Bei Wassereintritt durch einen mikroskopischen Primärdefekt bildet sich eine dickere Oxidschicht mit einem höheren Wasserstoff-Partialdruck aus, wobei gleichzeitig die bessere Barrierenwirkung einer sich auf Zirkaloy bildenden Oxidschicht nicht mehr gegeben ist. Sobald also die Anwesenheit von Wasserdampf und Wasserstoff im Innenvolumen des Brennstabs nicht vollkommen ausgeschlossen ist, ist zu befürchten, daß trotz einer verringerten PCI-Empfindlichkeit bei Lastwechseln und bereits deutlich geringerer Fehlerhäufigkeit die Neigung zu seltenen, aber großflächigen Hydrierungen wächst.

Starke Hydrierungen erhöhen aber die Brüchigkeit des Materials, so daß durch einen derartigen Liner die Gefahr großflächiger Risse als Folge vereinzelter Defekte wächst. Die Erfahrung scheint dies zu bestätigen.

Da ferner die sich auf Reinzirkon-Linern bildenden, dickeren Oxidschichten eine schlechte Wärmeleitfähigkeit besitzen, führen lokale Erhitzungen und thermische Volumenänderungen des Brennstoffs zu mechanischen Spannungen, die die von der Oxidation hervorgerufenen Volumenänderungen noch verstärken. Obwohl der Liner also an sich die Defekt-Anfälligkeit des Hüllrohres bei Laständerungen ausgleichen sollte, kommt es in solchen Fällen zu verstärkten mechanischen Beanspruchungen und schließlich zu einem Aufplatzen oder Aufreißen des Hüllrohres. Durch diese Risse können dann größere Mengen an Brennstoff ins Kühlmittel austreten, so daß bereits wenige derartige, größere Risse eine stärkere Kontaminierung des Kühlmittels und damit ernstere Betriebsschäden hervorrufen, als eine Vielzahl lokaler PCI-Defekten.

Die Vorteile des erfindungsgemäß modifizierten Zirkaloys werden mit dem Konzept eines Liners kombiniert, indem eine Innenauskleidung aus reinem Zirkon bzw. Zirkon-Schwamm gefertigt wird, wobei ein die Korrosionsbeständigkeit gegenüber Wasserdampf erhöhender Bestandteil zulegiert wird, der die Festigkeit nicht beeinflußt.

Aus der europäischen Patentschrift 121204 ist zwar ein Liner aus Zirkonschwamm mit einer Zinn-Legierung zwischen 0,1 und 1 Gew.% bekannt, jedoch verringert ein derartiger Zusatz zunächst nur die Empfindlichkeit gegen stickstoffhaltige Verunreinigungen im Werkstoff und kann höchstens dazu dienen, die Korrosion von Zirkonschwamm, der aufgrund seiner Verunreinigungen leichter korrodiert als hochreines Zirkonium, der Korrosionsbeständigkeit von hochreinem Zirkonium anzunähern. Eine ausreichende Korrosionsbeständigkeit könnte höchstens durch weitere, zusätzliche Legierungsbestandteile erreicht werden.

Demgegenüber geht die Erfindung davon aus, daß ein Zusatz von Eisen in mehrfacher Hinsicht vorteilhaft ist.

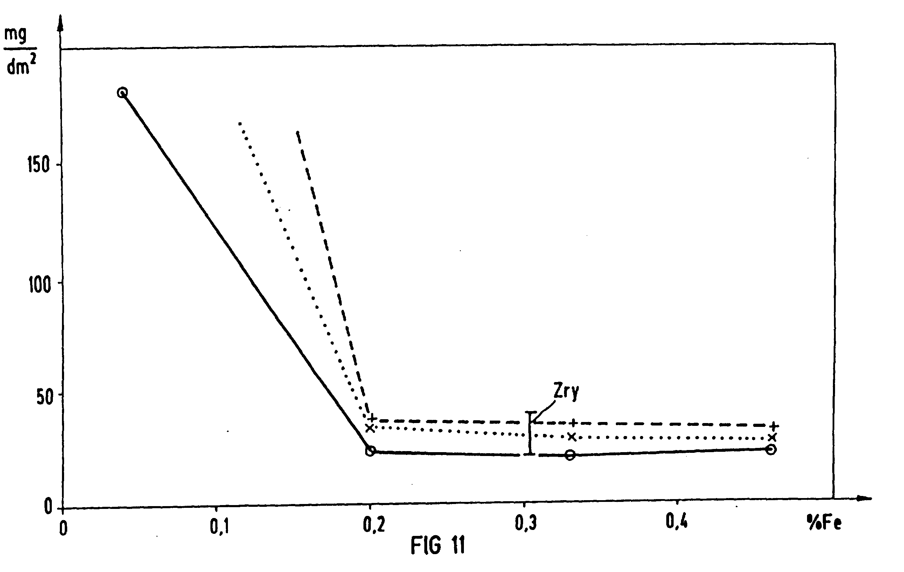

Figur 11 zeigt die korrosionsbedingte Gewichtszunahme einer Zirkon-Eisen-Legierung nach 30 Tagen (Symbol "o"), nach 60 Tagen (Symbol "x") und nach 100 Tagen (Symbol "+"), jeweils bei einem Eisengehalt von etwa 0,2 bzw. 0,33 und etwa 0,46 Gew.%. Die dabei erhaltenen Werte für Liner-Material mit 0,2 % Fe oder mehr liegen praktisch im gleichen Bereich, der auch bei Zirkaloy gefunden wird.

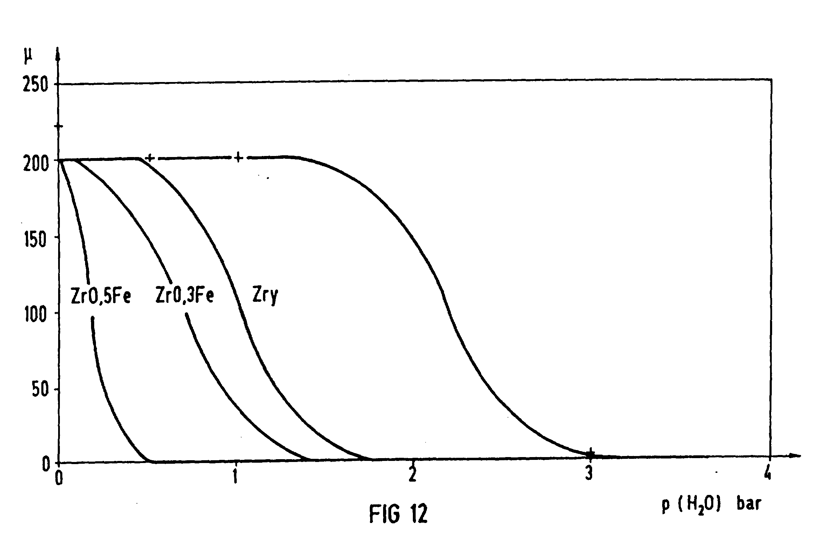

Figur 12 zeigt die Dicke des Hydridsaumes, die an einem Zirkonschwamm-Liner (Symbol "+") auftritt, der drei Tage lang einer Wasserstoffatmosphäre von 100 bar bei 350° C ausgesetzt war, wobei der Partialdruck $P(H_2O)$ von Wasserdampf in der Wasserstoffatmosphäre variiert wurde.

Bei einem hohen Dampfdruck-Verhältnis $p(H_2)/p(H_2O)$, d. h. wenn ein großer Teil des in das Hüllrohr eingedrungenen Wassers durch Oxidation des Brennstoffs in $H_2$ umgesetzt ist, bildet sich eine verhältnismäßig dicke Hydridschicht an der Werkstoff-Oberfläche. Im anderen Fall, bei dem z. B. nur wenig Wasserstoff vorliegt, liegt praktisch keine Hydrierung vor. Das Ziel ist daher, den kritischen Wert, an dem die Hydrierung als Funktion des Dampfdrucks abnimmt, möglichst zu kleinen Verhältnissen $p(H_2O)/p(H_2)$ zu verschieben.

Die mit "Zry" bezeichnete Kurve der Figur 12 zeigt, daß bereits bei Zirkaloy bessere Verhältnisse vorliegen, also ein Zirkonium-Liner nicht nur bezüglich der gleichmäßigen Korrosion, sondern auch der Hydrierung (und damit der Sekundärschäden) ungünstig ist. Eine deutliche Verbesserung zeigt aber ein Liner-Material aus Zirkonium mit einem Eisengehalt über 0,3 %.

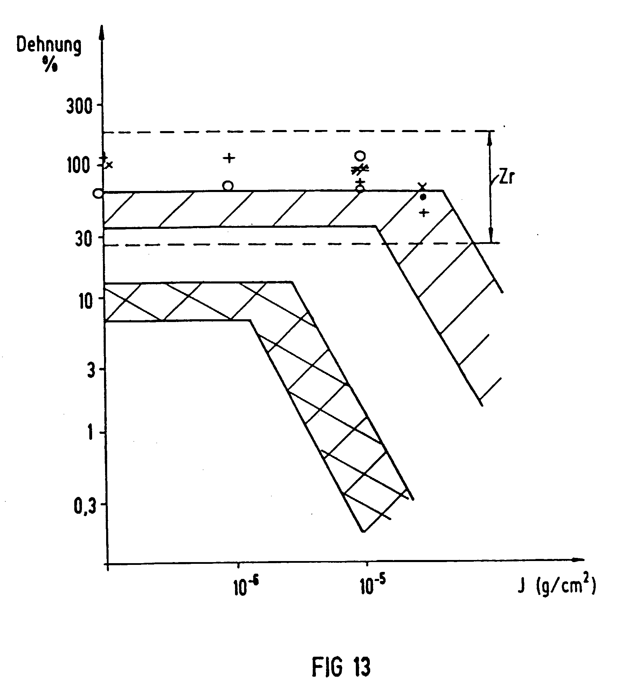

Bezüglich der Duktilität, die insbesondere bei Leistungsänderungen zur Herabsetzung der PCI-Effekte für erforderlich gehalten wird, ist Eisen besonders geeignet, da es sich in reinem Zirkonium praktisch nicht löst, sondern in wenigen, relativ großen Ausscheidungen aus intermetallischen Phasen sammelt. Die günstige Duktilität des Zirkoniums wird also weder durch einen fremden Lösungsbestandteil noch durch viele Fremdausscheidungen verschlechtert. Darüber hinaus zeigt Figur 13, daß ein Hüllrohr mit einem Liner, der mit unterschiedlichen Eisengehalten (0,2 Gew.%, Symbol "+" bzw. 0,33 Gew.%, Symbol "x" bzw. 0,46 Gew.%, Symbol "o") dotiert ist, auch dann, wenn seine Oberfläche verschiedenen Jod-Mengen ausgesetzt ist, erst bei sehr hohen Dehnungen bricht, die etwa in dem mit Zr bezeichneten Bruchdehnungsbereich liegen, der für Zry-Hüllrohre mit einem Liner aus unlegiertem Zirkonium gefunden wird. Bisher übliche Zry-Hüllrohre ohne Liner brechen bereits bei Dehnungen, die in einem niedrigeren, doppelt schraffiert dargestellten Bereich liegen, und selbst dann, wenn durch besondere Fertigungsmaßnahmen eine feine Kornstruktur des Zirkaloys sichergestellt ist (schraffierter Bereich der Figur 13), werden die Werte des erfindungsgemäßen Liners kaum erreicht.

Die Erfindung stellt somit einen Werkstoff bereit, der hinsichtlich seiner Legierungsbestandteile nicht grundsätzlich von zugelassenen Zirkonlegierungen abweicht, jedoch bezüglich chemischer und mechanischer Stabilität reproduzierbare und zuverlässige Materialeigenschaften aufweist, die bei herkömmlichen Zirkonlegierungen nur in unreproduzierbarer Weise zufällig erhalten werden. Bei der Dimensionierung entsprechender Hüllrohre eines Siedewasser-Brennelementes kann daher von diesen reproduzierbaren Werten ausgegangen werden, ohne daß Exemplarstreuungen mit ungünstigeren Werten berücksichtigt zu werden brauchen. Das aus dem erfindungsgemäßen Werkstoff hergestellte Hüllrohr ist mit einer eisenhaltigen Innenauskleidung versehen, die das Hüllrohr an der Innenseite vor Schäden weitgehend schützt.

Tab. 1

|  | Sponge | Zry 2 | Zry 4 | Zr/Nb |
|---|---|---|---|---|
| Element | Composition, Weight % | | | |
|  | Grade R60001 | Grades R60802 R60812 | Grades R60804 R60814 | Grade R60901 |
| Tin | ... | 1.20-1.70 | 1.20-1.70 | ... |
| Iron | ... | 0.07-0.20 | 0.18-0.24 | ... |
| Chromium | ... | 0.05-0.15 | 0.07-0.13 | ... |
| Nickel | ... | 0.03-0.08 | ... | ... |
| Niobium | ... | ... | ... | 2.40-2.80 |
| Oxygen | 1) | 1) | 1) | 0.09-0.13 |
| Iron+Chromium+Nickel | ... | 0.18-0.38 | ... | ... |
| Iron+Chromium | ... | ... | 0.28-0.37 | ... |
| Maximum Impurities, Weight % | | | | |
| Aluminium | 0,0075 | 0,0075 | 0,0075 | 0,0075 |
| Boron | 0,00005 | 0,00005 | 0,00005 | 0,00005 |
| Cadmium | 0,00005 | 0,00005 | 0,00005 | 0,00005 |
| Carbon | 0,027 | 0,027 | 0,027 | 0,027 |
| Chromium | 0,020 | ... | ... | 0,020 |
| Cobalt | 0,0020 | 0,0020 | 0,0020 | 0,0020 |
| Copper | 0,0050 | 0,0050 | 0,0050 | 0,0050 |
| Hafnium | 0,010 | 0,010 | 0,010 | 0,010 |
| Hydrogen | 0,0025 | 0,0025 | 0,0025 | 0,0025 |
| Iron | 0,150 | ... | ... | 0,150 |
| Magnesium | 0,0020 | 0,0020 | 0,0020 | 0,0020 |
| Manganese | 0,0050 | 0,0050 | 0,0050 | 0,0050 |
| Molybdenum | 0,0050 | 0,0050 | 0,0050 | 0,0050 |
| Nickel | 0.0070 | ... | 0.0070 | 0.0070 |
| Nitrogen | 0.0080 | 0.0080 | 0.0080 | 0.0080 |
| Silicon | 0.0120 | 0.0120 | 0.0120 | 0.0120 |
| Tin | 0.0050 | ... | ... | 0.0050 |
| Tungsten | 0.010 | 0.010 | 0.010 | 0.010 |
| Uranium (total) | 0.00035 | 0.00035 | 0.00035 | 0.00035 |

1) When so specified in the purchase order, oxygen shall be determined and reported. Maximum or minimum permissible values, or both, shall be as specified in the purchase order.

Tab. 2a

| Nr. | Sn | | Fe | | Cr | | Nb | | Ni | | Ox | | Fe+Cr+Ni | |
|---|---|---|---|---|---|---|---|---|---|---|---|---|---|---|
| | min | max | min | max | min | max | min | max | min | max | min | max | | |
| DE 3226403 DE 3038366 DE 3442209 | | | | | | | | | | | | | 0,4..1,5 | ZrO2+Cu |
| DE 3248235 EP 0192405 | | | | | | | | | | | | | | Cu 0,02 ... 0,2 |
| J 62047582 DE 3248235 | | | | | | | | | | | | | | V:0,05-0,5 Fe+Cr 0,15-0,3 |
| DE 3003610 DE 3248235 DE 3248235 | | | | | 0,05 | 0,3 | | | | | | | | Fe+Cr 0,2-0,25 |
| EP 0195154 DE 3248235 J 62047582 | | | | | 0,15 | 0,25 | | | | | | | | V:0,2,8b:0,05-0 |
| US 4894203 DE 3248235 EP 0192405 DE 3248235 | | | | | | | | | | | | | | Cu:0,05 ...0,15 |
| DE 3124935 DE 3003610 | | | | | | | | | | | | | | |
| EP 0155603 83-795434 J 62047582 | | | 0,05 | 0,2 | | | | | | | | | | V:0,05-0,5 |
| DE 3248235 | | | 0,2 | 0,25 | | | | | | | | | | |
| DE 3248235 | | | 0,02 | 0,3 | | | | | | | | | | |
| J 62047582 | | | 0,05 | 0,2 | | | | | | | | | | |
| US 4894203 US 4894203 | | | 0,2 | 0,3 | 0,05 | 0,3 | 0,01 | 0,6 | | | | | 0,15 0,3 | Cu 0,02 ... 0,2 |

EP 0 726 966 B1

Tab. 2b

| | Sn | | Fe | | Cr | | Nb | | Ni | | Ox | | Fe+Cr+Ni | |
|---|---|---|---|---|---|---|---|---|---|---|---|---|---|---|
| | min | max | min | max | min | max | min | max | min | max | min | max | | |
| DE 3310054 | | | | | | | 0,2 | 0,4 | | | | | | |
| DE 3310054 | | | | | | | 0,1 | 0,5 | | | | | | |
| DE 3310054 | | | | | | | 0,1 | 0,5 | | | | | | |
| US 4894203 | | | 0,2 | 0,3 | 0,05 | 0,3 | 0,01 | 0,6 | | | | | 0,15 0,3 | Cu:0,02...0,2 |
| EP 0326898 | | | 0,02 | 0,2 | 0,05 | 0,3 | 0,01 | 0,6 | | | | | 0,02 0,2 | Cu:0,02...0,2 |
| US 7152507 | | | 0,2 | 0,3 | 0,05 | 0,3 | 0,01 | 0,6 | | | | | 0,15 0,3 | Cu:0,02...0,2 |
| EP 0161539 | | | | | | | | | | 100 | | | | |
| EP 0155168 | 0,5 | | 0,04 | | | | | | | | 300 | | | |
| EP 0155168 | 0,5 | | 0,08 | | | | | | | | 70 | | | |
| EP 0155168 | 0,5 | | 0,04 | | | | | | | | 70 | | | |
| SE 8406646 | 0,18 | 0,22 | 0,09 | 0,11 | | | 0,09 | 0,11 | 0,09 | 0,11 | | | | |
| SE 8406646 | 0,22 | 0,28 | 0,22 | 0,28 | | | | | | | | | | |
| EP 0195155 | 0,1 | 0,3 | 0,05 | 0,2 | 0,03 | 0,1 | 0,05 | 0,4 | 0,03 | 0,1 | 300 | 1200 | <0,25 | |
| EP 0195154 | 0,19 | 0,3 | 0,19 | 0,3 | | | | | | | | | | |
| EP 0194797 | 0,4 | 0,5 | 0,5 | 1,4 | | | | | | | | | | |
| SE 8406646 | 0,45 | 0,55 | 0,18 | 0,22 | | | | | 0,18 | 0,22 | | | | |
| SE 8406646 | 0,45 | 0,55 | 0,35 | 0,45 | | | | | | | | | | |
| EP 0155167 | 0,1 | 0,6 | 0,07 | 0,24 | 0,05 | 0,5 | 0,15 | | | 0,05 | | 350 | | |
| 85-231841 | 0,2 | 0,6 | 0,03 | 0,11 | | | | | | | | 350 | | |
| EP 0155168 | 0,2 | 0,6 | 0,03 | 0,06 | | | | | | | | | | |
| EP 0195154 | 0,4 | 0,6 | 0,1 | 0,3 | | | | | 0,1 | 0,3 | | | | |
| EP 0194797 | 0,4 | 0,6 | 0,5 | 1,4 | | | | | | | 100 | 700 | | |
| EP 0195154 | 0,4 | 0,6 | 0,3 | 0,5 | | | | | 0,1 | 0,3 | 100 | 700 | | |
| EP 0195154 | 0,4 | 0,6 | 0,3 | 0,5 | | | | | | | | | | |
| EP 0195154 | 0,4 | 0,6 | 0,1 | 0,3 | | | | | | 0,05 | | | | |
| 85-231840 | 0,1 | 0,6 | 0,07 | 0,24 | 0,05 | 0,15 | | | | | | 350 | | |
| EP 0195154 | 0,19 | 0,6 | 0,19 | 0,5 | | | | | | | | | | |

Tab. 2b  (continued)

| | Sn | | Fe | | Cr | | Nb | | Ni | | Ox | | Fe+Cr+Ni |
|---|---|---|---|---|---|---|---|---|---|---|---|---|---|
| | min | max | min | max | min | max | min | max | min | max | min | max | |
| EP 0155168 | 0,4 | 0,6 | 0,03 | 0,11 | | | | | | | | | |
| EP 0195154 | 0,19 | 0,6 | 0,19 | 0,5 | | | | | | | | 350 | |
| EP 0155168 | 0,2 | 0,6 | 0,03 | 0,11 | | | | | | | | 350 | |
| EP 0194797 | 0,4 | 0,6 | 0,5 | 1 | | | | | | | | | |
| EP 0121204 | 0,1 | | 1 | | | | | | | | | | |

Tab. 3

|  | Min. Gew.% | Max. Gew.% |  |  |
|---|---|---|---|---|
| Sn | 1,45 | 1,7 | Zry: | 1,2 ... 1,70 |
| Fe | 0,15 | 0,4(0,3/0,24) | Zry 2:<br>Zry 4: | 0,07 ... 0,20<br>0,18 ... 0,24 |
| Cr | 0,1(0,12) | 0,3 (0,25) | Zry 2:<br>Zry 4: | 0,05 ... 0,15<br>0,07 ... 0,13 |
| Ni |  | 0,08 (0,05) | Zry 2:<br>Zry 4: | 0,03 ... 0,08<br>0 ... 0,007 |
| Fe&Cr&Ni<br>Fe&Cr |  |  | Zry 2:<br>Zry 4: | 0,18 ... 0,38<br>0,28 ... 0,37 |
| Si | 0,005 (0,007) | 0,012 | Zry: | < 0,012 |
| O | 0,04 (0,07) | 0,12 (0,11) |  |  |
| C |  | 0,02 (0,015) | Zry: | < 0,027 |

Tab.4

|  |  | Zry 2 | | Zry 4 | | Zry-Cr |
|---|---|---|---|---|---|---|
|  |  | min | max | min | max |  |
| Tin | % | 1,45 | 1,70 | 1,45 | 1,70 |  |
| Iron | % | 0,15 | 0,20 | 0,20 | 0,24 |  |
| Chromium | % | 0,12 | 0,15 | 0,10 | 0,15 | 0,25 |
| Nickel | % | 0,03 | 0,05 | - | - |  |
| Fe + Cr + Ni | % |  | 0,38 |  | 0,37 | 0,40 |
| Silicon | ppm | 70 | 120 | 70 | 120 |  |
| Oxygen | ppm | 700 | 1100 | 700 | 1100 |  |
| Carbon | ppm |  | 150 |  | 150 |  |

Tab. 5

| Sn (%) | Fe (%) | Cr (%) | Ni (%) | O (%) | C (ppm) | Si (ppm) |
|---|---|---|---|---|---|---|
| 1,17 | 0,17 | 0,06 |  | 0,14 | 120 | 26 |
| 1,71 | 0,17 | 0,06 |  | 0,13 | 90 | 27 |
| 1,20 | 0,24 | 0,12 |  | 0,14 | 93 | 27 |
| 1,15 | 0,16 | 0,06 |  | 0,14 | 283 | 28 |
| 1,18 | 0,17 | 0,06 |  | 0,14 | 90 | 135 |
| 1,17 | 0,17 | ,06 |  | 0,14 | 77 | 30 |
| 1,75 | 0,24 | 0,12 |  | 0,13 | 60 | 26 |
| 1,72 | 0,15 | 0,06 |  | 0,14 | 270 | 26 |
| 1,69 | 0,17 | 0,06 |  | 0,14 | 73 | 141 |
| 1,70 | 0,17 | 0,06 |  | 0,13 | 67 | 27 |
| 1,14 | 0,21 | 0,10 |  | 0,08 | 40 | 20 |
| 1,49 | 0,21 | 0,10 |  | 0,08 | 50 | 93 |
| 1,79 | 0,21 | 0,10 |  | 0,08 | 60 | 170 |
| 1,13 | 0,18 | 0,09 |  | 0,14 | 60 | 177 |
| 1,47 | 0,21 | 0,10 |  | 0,13 | 40 | 177 |
| 1,14 | 0,21 | 0,10 |  | 0,20 | 40 | 126 |
| 1,48 | 0,18 | 0,10 |  | 0,19 | 40 | 14 |

Tab. 5 (fortgesetzt)

| Sn (%) | Fe (%) | Cr (%) | Ni (%) | O (%) | C (ppm) | Si (ppm) |
|--------|--------|--------|--------|-------|---------|----------|
| 1,13 | 0,22 | 0,10 | | 0,08 | 200 | 151 |
| 1,50 | 0,21 | 0,10 | | 0,08 | 190 | 15 |
| 1,75 | 0,21 | 0,11 | | ,08 | 180 | 86 |
| 1,45 | 0,21 | 0,10 | | 0,14 | 160 | 103 |
| 1,75 | ,21 | 0,10 | | 0,13 | 170 | 147 |
| 1,13 | 0,21 | 0,10 | | 0,14 | 170 | 17 |
| 1,12 | 0,20 | 0,10 | | 0,20 | 190 | 97 |
| 1,49 | 0,20 | 0,10 | | 0,19 | 180 | 158 |
| 1,75 | 0,20 | 0,10 | | 0,20 | 170 | 15 |
| 1,60 | 0,23 | 0,12 | | 0,18 | 230 | 25 |
| 1,45 | 0,21 | 0,10 | | 0,09 | 41 | 35 |
| 1,48 | 0,22 | 0,10 | | 0,10 | 93 | 93 |
| 1,58 | 0,21 | 0,12 | | 0,12 | 70 | |
| 1,62 | 0,21 | 0,11 | 0,05 | 0,12 | 70 | |
| 1,58 | 0,42 | 0,24 | | 0,12 | 70 | |
| 1,52 | 0,10 | 0,04 | | 0,12 | 70 | |
| 1,64 | 0,12 | 0,58 | | 0,12 | 70 | |
| 1,22 | 0,34 | 0,57 | | 0,12 | 70 | |
| 0,58 | 0,05 | 0,05 | | 0,12 | 70 | |
| 0,24 | 0,53 | 0,05 | | 0,12 | 70 | |
| 0,28 | 0,05 | 1,05 | | 0,12 | 70 | |

**Patentansprüche**

1. Hüllrohr eines Brennstabes für einen Siedewasser-Kernreaktor aus einer Zirkoniumlegierung bestehend aus

   Sn: 1,45 bis 1,7 Gew.%,
   Fe: 0,15 bis 0,4 Gew.%,
   Cr: 0,1 bis 0,3 Gew.%,
   Ni: bis zu 0,08 Gew.%,

   wahlweise:

   Si: 0,005 bis 0,012 Gew%,
   O (Sauerstoff): 0,05 bis 0,12 Gew%,

   weniger als 0,02 Gew.% C, Rest technisch reines Zirkonium, das mit einer Innenauskleidung aus einer Innenschicht, deren Dicke 5 bis 20 % der Wandstärke des Hüllrohres beträgt und die aus einer technisch reinen Zirkoniumlegierung mit einem Legierungszusatz von 0,2 bis 0,8 Gew% Fe besteht, versehen ist.

2. Hüllrohr nach Anspruch 1,
   **dadurch gekennzeichnet**, daß
   die Zirkoniumlegierung einen Siliziumgehalt zwischen 0,005 und 0,012 Gew.%, einen Sauerstoffgehalt zwischen 0,05 und 0,12 Gew.% und einen Kohlenstoffgehalt unter 0,02 Gew.% und die Innenschicht einen Eisengehalt von mindestens 0,3 Gew.% aufweist.

3. Hüllrohr nach Anspruch 1 oder 2,
   **dadurch gekennzeichnet**, daß
   die Zirkoniumlegierung einen Siliziumgehalt zwischen 0,005 und 0,012 Gew.%, einen Sauerstoffgehalt zwischen 0,05 und 0,12 Gew.% und einen Kohlenstoffgehalt unter 0,02 Gew.% und die Innenschicht einen Eisengehalt von höchstens 0,6 Gew.%, vorzugsweise etwa 0,5 Gew.% aufweist.

4. Hüllrohr nach einem der Ansprüche 9 bis 11,
**gekennzeichnet durch**
folgende Zusammensetzung der Zirkoniumlegierung:

> Sn: 1,45 bis 1,7 Gew.%,
> Fe: 0,15 bis 0,2 Gew.%,
> Cr: 0,12 bis 0,25 Gew.%,
> Ni: 0,03 bis 0,05 Gew.%,
> Si: 0,007 bis 0,012 Gew.%,
> O: 0,05 bis 0,11 Gew.%,
> C: unter 0,015 Gew.%,
> Rest: technisch reines Zirkonium

und einer Zusammensetzung der Innenauskleidung:

> Fe: 0,3 bis 0,6 Gew.% (vorteilhaft etwa 0,5 Gew.%),
> Rest: technisch reines Zirkonium.

5. Hüllrohr nach Anspruch 4,
**gekennzeichnet durch**
eine mittlere Teilchengröße der in der Zirkoniumlegierung ausgeschiedenen Legierungszusätze zwischen 0,03 und 0,1 µ, vorteilhaft unter 0,07 µ.

6. Brennstab für einen Siedewasser-Kernreaktor mit einem Hüllrohr nach einem der Ansprüche 1 bis 5.

## Claims

1. Sheathing tube of a fuel rod for a boiling-water nuclear reactor, made from a zirconium alloy comprising

> Sn: 1.45 to 1.7% by weight,
> Fe: 0.15 to 0.4% by weight,
> Cr: 0.1 to 0.3% by weight,
> Ni: up to 0.08% by weight,

optionally:

> Si: 0.005 to 0.012% by weight,
> O (oxygen) : 0.05 to 0.12% by weight,

less than 0.02% by weight C, the remainder technically pure zirconium,
which is provided with an inner lining made from an inner layer, the thickness of which is 5 to 20% of the wall thickness of the sheathing tube and which consists of a technically pure zirconium alloy with an alloying additive of 0.2 to 0.8% by weight Fe.

2. Sheathing tube according to Claim 1, characterized in that the zirconium alloy has a silicon content of between 0.005 and 0.012% by weight, an oxygen content of between 0.05 and 0.12% by weight and a carbon content of below 0.02% by weight, and the inner layer has an iron content of at least 0.3% by weight.

3. Sheathing tube according to Claim 1 or 2, characterized in that the zirconium alloy has a silicon content of between 0.005 and 0.012% by weight, an oxygen content of between 0.05 and 0.12% by weight and a carbon content below 0.02% by weight, and the inner layer has an iron content of at most 0.6% by weight, preferably approximately 0.5% by weight.

4. Sheathing tube according to one of Claims 1 to 3, characterized by the following composition of the zirconium alloy:

> Sn: 1.45 to 1.7% by weight,
> Fe: 0.15 to 0.2% by weight,

Cr: 0.12 to 0.25% by weight,
Ni: 0.03 to 0.05% by weight,
Si: 0.007 to 0.012% by weight,
O: 0.05 to 0.11% by weight,
C: below 0.015% by weight,
remainder: technically pure zirconium,

and a composition of the inner lining:

Fe: 0.3 to 0.6% by weight (advantageously approximately 0.5% by weight),
remainder: technically pure zirconium.

5. Sheathing tube according to Claim 4, characterized by a mean particle size of the alloying additives precipitated in the zirconium alloy of between 0.03 and 0.1 μ, advantageously below 0.07 μ.

6. Fuel rod for a boiling-water nuclear reactor with a sheathing tube according to one of Claims 1 to 5.

**Revendications**

1. Gaine d'un crayon combustible de réacteur nucléaire à eau bouillante, en un alliage de zirconium consistant en :

Sn : 1,45 à 1,7 % en poids,
Fe : 0,15 à 0,4 % en poids,
Cr : 0,1 à 0,3 % en poids,
Ni : jusqu'à 0,08 % en poids,

éventuellement :

Si : 0,005 à 0,012 % en poids,
O (oxygène) : 0,05 à 0,12 % en poids,

moins de 0,02 % en poids de C, le reste étant du zirconium techniquement pur qui est muni d'un revêtement intérieur constitué d'une couche intérieure dont l'épaisseur représente de 5 à 20 % de l'épaisseur de la paroi de la gaine et qui est en un alliage de zirconium techniquement pur avec, comme additifs de l'alliage, de 0,2 à 0,8 % en poids de Fe.

2. Gaine suivant la revendication 1,
caractérisée en ce que
l'alliage en zirconium a une teneur en silicium comprise entre 0,005 et 0,012 % en poids, une teneur en oxygène comprise entre 0,05 et 0,12 % en poids et une teneur en carbone inférieure à 0,02 % en poids et la couche intérieure a une teneur en fer d'au moins 0,3 % en poids.

3. Gaine suivant la revendication 1 ou 2,
caractérisée en ce que
l'alliage de zirconium a une teneur en silicium comprise entre 0,005 et 0,012 % en poids, une teneur en oxygène comprise entre 0,05 et 0,12 % en poids et une teneur en carbone inférieure à 0,02 % en poids et la couche intérieure a une teneur en fer d'au plus 0,6 % en poids, de préférence, d'environ 0,5 % en poids.

4. Gaine suivant l'une des revendications 1 à 3,
caractérisée par la composition suivante de l'alliage de zirconium :

Sn : 1,45 à 1,7 % en poids,
Fe : 0,15 à 0,2 % en poids,
Cr: 0,12 à 0,25 % en poids,
Ni : 0,03 à 0,05 % en poids,
Si : 0,007 à 0,012 % en poids,
O: 0,05 à 0,11 % en poids,

C : inférieur à 0,015 % en poids,
reste : zirconium techniquement pur

et une composition du revêtement intérieur de :

Fe : 0,3 à 0,6 % en poids (de préférence environ 0,5 % en poids),
reste : zirconium techniquement pur.

5. Gaine suivant la revendication 4,
caractérisée par une granulométrie moyenne des additifs d'alliage précipités dans l'alliage de zirconium comprise entre 0,03 et 0,1 $\mu$, de préférence inférieure à 0,07 $\mu$.

6. Crayon combustible pour un réacteur nucléaire à eau bouillante ayant une gaine selon l'une des revendications 1 à 5.

FIG 1

FIG 2

FIG 3

FIG 4

FIG 5

FIG 6

FIG 7

EP 0 726 966 B1

FIG 8

FIG 9

FIG 10

FIG 11

EP 0 726 966 B1

FIG 12

FIG 13